# EUROPEAN PATENT SPECIFICATION

(11) **EP 4 230 423 B1**
(45) Date of publication and mention of the grant of the patent: **03.09.2025**
(21) Application number: 22156979.1
(22) Date of filing: 16.02.2022
(51) Int. Cl.: B41J 3/60, B41J 11/66, G06F 3/12, B41J 15/04, B41J 11/00

(54) **METHOD AND USER INTERFACE FOR DOUBLE-SIDED PRINTING ON A PRINTING SYSTEM**
VERFAHREN UND BENUTZERSCHNITTSTELLE ZUM DOPPELSEITIGEN DRUCKEN AUF EINEM DRUCKSYSTEM
PROCÉDÉ ET INTERFACE UTILISATEUR POUR IMPRESSION RECTO-VERSO SUR UN SYSTÈME D'IMPRESSION

(43) Date of publication of application: 23.08.2023
(73) Proprietor: Canon Production Printing Holding B.V., 5914 HH Venlo (NL)
(72) Inventor: VULPE, Radu, Venlo (NL); MURESAN, Alexandru I., Venlo (NL)
(74) Representative: Canon Production Printing IP Department

(56) References cited:
- EP-A1- 2 361 778
- US-A1- 2002 181 021
- US-A1- 2006 007 293

## Description

### BACKGROUND OF THE INVENTION

The invention relates to a method for double-sided printing of a plurality of digital images on a recording medium by means of a printing system, each image of the plurality of digital images consisting of a plurality of pixels, wherein the method comprises the steps of
- receiving a front side image to be printed at a first location on a first side of the recording medium,
- receiving a back side image to be printed at a second location on a second side of the recording medium corresponding to the location on the first side of the recording medium,
- providing the front side image with cut marks for a cutting process applied to the front side image, wherein the cutting process is planned after printing on both sides of the recording medium, and
- printing the front side image and the cut marks at the first location on the first side of the recording medium.

The printing system may be a cut sheet printing system or a roll-based printing system. The cut sheet printing system may be a flatbed printer.

The roll based printing system may be a roll to roll printing system or a roll to sheet printing system. Hereinafter the roll to roll printing system may also be called "roll to roll printer", "R2R printing system" or "R2R printer". Hereinafter the roll to sheet printing system may also be called "roll to sheet printer", "R2S printing system" or "R2S printer". Hereinafter the cut sheet printing system may also be called "cut sheet printer", "CS printing system" or "CS printer".

For instance, in a network system, a personal workstation of a user and the printing system are interconnected for printing digital images that have been made in a workstation. Digital image reproduction apparatuses can advantageously be used as printing systems for printing on a sheet or roll of recording medium. Such a digital image apparatus includes a scanner unit, a print unit, a memory, and a user interface integrated in the apparatus or remotely usable by an operator. The user interface is provided with an input capability and a display that permit a user to give operator control commands to the apparatus. Further, the printing system includes a network connection unit for coupling to a network for the purpose of communication with a digital external environment having at least a number of workstations of users, and a print controller connected to the scanner unit, printing system unit, memory and network connection unit, and, via the network connection unit, to the workstations and even to other printing systems in the network.

The method according to the present invention is used for double sided printing, i.e. printing on both sides of the recording medium. Usually a sheet or roll is firstly printed on one side of the recording medium and secondly on the other side of the recording medium. Hereinafter the one side of the recording medium is referred to as a front side and the other side of the recording medium is referred to as a back side. It is noted that there exist printers which are configured to print both front and back side of a sheet or roll substantially simultaneously. The front side image to be printed and the corresponding back side image to be printed may be received by the print controller in the form of one print job containing both images. A print job may also contain a plurality of front side images and a plurality of corresponding back side images.

The present invention generally pertains to a method for controlling a printing system for printing images on a recording medium, the printing system comprising a print engine and a controller.

The invention also pertains to a software medium comprising executable code configured to, when executed, perform a method for controlling a printing system. The invention also pertains to a printing system configured to execute the method according to the invention.

The term "printing" is used herein as a general term for any marking of a recording medium with any marking material. As a synonym, the term "image forming" may be used. Recording mediums may comprise paper, flexible plastic, metal foils, textiles and so on. Marking materials may comprise ink, metal, varnish, toner and so on. "Marking" may be any process by which the marking material is applied to the recording medium.

### BACKGROUND ART

In printers a recording medium is transported from an input holder along a paper path comprising a marking unit to an output holder. In particular, in roll-fed printers, a recording medium such as paper is wound up on an input roll and then fed into, and guided along, a path through the printer, unwinding the input roll by and by along the process.

In this way, the recording medium is fed to a marking unit of the printer which applies a marking material (prints) onto the recording medium.

Roll-to-roll printers are a common type of roll-fed printers and are characterized in that the recording medium is, after images have been printed on it, wound up on an output holder of an output roll by and by along the process.

Some printers comprise a cutting unit configured to cut the recording medium after images have been printed on it such that the printer does not output the entire contiguous recording medium but instead cut pieces of it. An example of such a printer is a R2S printer.

Rigids or large sheets may be printed on both sides by means of a flatbed printer and cut afterwards by a cutter. The method of the invention is also applicable to flatbed printing production.

Roll-fed printers are very efficient devices for forming a large number of images requiring a large amount of the recording medium, as the wound-up input rolls are comparatively easy to handle by both the printers and their operating personnel. Accordingly, little or no supervision by personnel is needed for roll-fed printers, especially for roll-to-roll printers, as the marked recording medium is automatically stored on the output roll.

A cutting machine may be installed next to the printer for cutting the printed front side image out of the recording medium after printing the front side image on the recording medium. The cutting machine is able to read the cut marks provided to the front side image in order to establish an accurate cutting process.

According to patent application EP 2361778 A1 cut marks are provided to the back side image.

In order to print applications which have corresponding images on both sides of the recording medium a plurality of individual digital images are received by the print controller and are arranged in such a way that a front side image and a back side image are scheduled to be printed on the first location of the front side of the recording medium and on the second location of the back side of the recording medium respectively. The first location and the second location have the same X, Y coordinates with respect to common coordinate system.

When printing images on a front side and a back side of the recording medium a front/back alignment is not always correct and when the front side images are cut out of recording medium there may be white lines on the edges of the back side images.

Moreover, when any problems arise during the printing of the images, this may result in a considerable loss of resources such as time (because the printing process might be, or might have to be, stopped until a person can solve the problems) or recording medium and marking material (because a started job of a plurality of images or a started job of a large image might be irreparably botched and has to be started anew).

It is objective of the invention to solve the registration faults mentioned here-above and to have a method for controlling a printing system that delivers an optimal image quality in case of double-sided printing, e.g. printing on both a front side and a back side of the recording medium. It is also desirable to have a printing system capable of executing such a method.

### SUMMARY OF THE INVENTION

The objective of the invention is achieved by the method according to the invention comprising the steps of
- automatically creating an extended back side image which comprises the back side image and additional pixels surrounding the back side image,
- automatically establishing a fill out of the additional pixels by coloured pixels, and
- printing the extended back side image at the second side of the recording medium such that the back side image is printed at the second location on the second side of the recording medium.

The fact that the creation and fill out of the additional pixels is automated is in particular advantageous when a large amount of images is to be printed on the recording medium. For example, when a complete roll is intended to be double-sided printed, each back side image intended to be printed on the back side of the roll is automatically provided with the additional pixels. The automation according to the invention is also advantageous, when a large set of images is intended to be double-sided printed on a large plurality of cut sheets.

According to an embodiment the printing system comprises a user interface which is configured to display a plurality of front side images and a plurality of selectable back side images corresponding to the front side images and the method comprises the steps of selecting at least one selectable back side image and applying the steps of the method according to the invention to the at least one selected back side image. According to an embodiment the printing system has a system setting that automatically selects each back side image in case of double-sided printing of the back side image and the corresponding front side image.

According to an embodiment the step of establishing the fill out of the additional pixels comprises a fill out of an area between a bleed box and a trim box of the back side image, wherein the bleed box is surrounding the trim box and the trim box has the same dimensions as the back side image.

According to an embodiment the step of establishing the fill out comprises the sub-step of replicating all pixels on all edges of the back side image into the additional pixels.

The present invention also relates to a printing system for double-sided printing of a plurality of digital images on a recording medium, the printing system configured to execute a method according to the invention.

According to an embodiment the printing system is a roll-based printing system and the recording medium is a roll of medium.

According to an embodiment the roll-based printing system is a roll to roll printing system.

According to an embodiment the printing system is a flatbed printer.

The present invention also relates to a software medium comprising executable program code to cause a print controller of the printing system according to the invention to execute the steps of a method according to the invention.

Additional advantages, and the solution of additional problems, will be apparent from the subject-matter of the dependent claims as well as from the description and the drawings.

### BRIEF DESCRIPTION OF THE DRAWINGS

The present invention will become more fully understood from the detailed description given herein-below and the accompanying schematic drawings which are given by way of illustration only, and thus are not limitative of the present invention, and wherein:
- Fig. 1: schematically shows printing systems according to the invention;
- Fig. 2: schematically shows a front side image and a back side image on a recording medium to which the method according to the invention is applied;
- Fig. 3: schematically shows a back side image provided with boxes according to an embodiment of the invention;
- Fig. 4: shows a schematic flow diagram illustrating a method according to the invention; and
- Fig. 5: schematically shows a non-transitory software medium according to the invention.

### DETAILED DESCRIPTION OF THE DRAWINGS

The present invention will now be described with reference to the accompanying drawings, wherein the same reference numerals have been used to identify the same or similar elements throughout the several views, and in some instances throughout the several embodiments.

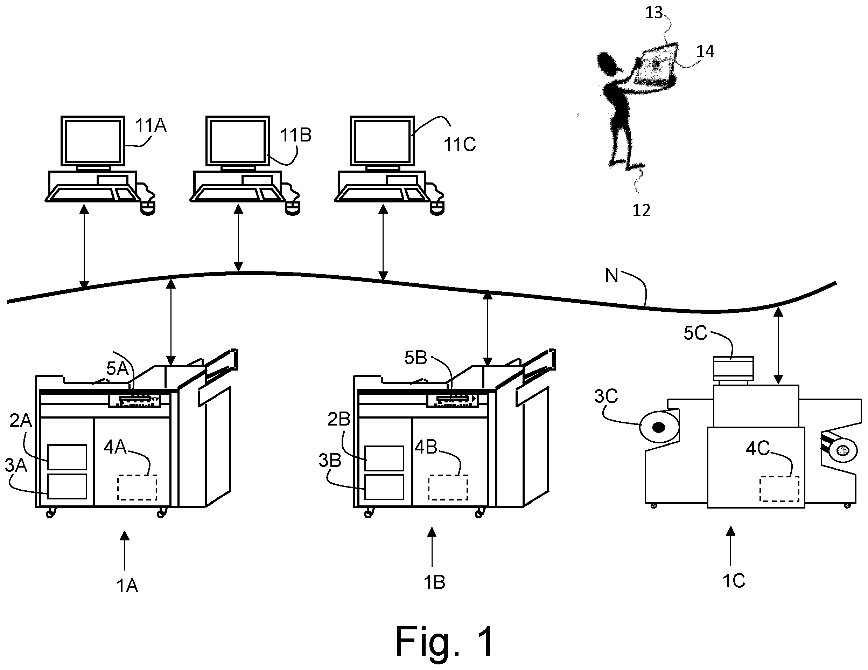

FIG. 1 shows three printers 1A, 1B, 1C which are connected to a network N. The printers 1A, 1B,1C are configured to execute the steps of the method according to the present invention. FIG. 1 shows schematically a printing system 1A which comprises at least one input holder 2A, 3A for holding a recording medium which is intended to be used for printing of print jobs from the print job queue of the printing system 1A by means of the marking unit (not shown). The marking unit may comprise at least one print head for adhering marking material like ink or toner to the recording medium. The recording medium in the least one input holder 2A, 3A is transported to a marking unit of the printing system 1A. The printing system 1A also comprises a local user interface 5A. While a specific printing system is shown and described, the disclosed embodiments may be used with other types of a printing system such as an inkjet printing system, an electrographic printing system, a cut sheet printing system, a roll fed printing system, a flatbed printing system, etc.

The printing system 1B also comprises a local user interface 5B, and at least one input holder 2B, 3B.

Another printing system 1C is also connected to the network N. The printing system 1C comprises an input roll holder for holding an input roll 3C of recording medium, a user interface 5C and a print controller 4C for controlling the printing process on the input roll 3C and maintaining a print job queue residing in the print controller 4C.

The printing systems 1A, 1B, 1C are digitally connected to a network N for bi-directional data signal transfer. The printing systems 1A, 1B, 1C comprise a print controller 4A, 4B, 4C respectively for controlling the printing process. The print controller 4A, 4B, 4C is a computer or server or a workstation, connected to the print engine of the printing system 1A, 1B, 1C respectively and connected to the digital environment of the printing system, for example the network N for transmitting a submitted print job to the printing system. In FIG. 1 the print controllers 4A, 4B, 4C are positioned inside the printing systems 1A, 1B, 1C respectively, but the print controllers may also be positioned outside the printing systems 1A, 1B, 1C in connection with the network N, for example in at least one of the workstations 11A, 11B, 11C. A print engine of the printing system 1A, 1B, 1C comprises a print head or print assembly for ejecting and/or fixing marking material to the recording medium and a paper path for transporting the recording medium from the input holders 2A, 2B, 3A, 3B, 3C to the print head or print assembly. The print head or print assembly may be an inkjet print head, a direct imaging toner assembly or an indirect imaging toner assembly. While a recording medium is transported along the paper path, the recording medium receives the marking material from the print head or print assembly before the printed recording medium is output in an output holder.

An operator 12 present in the neighbourhood of the printing systems 1A, 1B, 1C or even in another building than the printing systems 1A, 1B, 1C may use a remote wireless user interface 13 displaying printer processing information 14 of the printers 1A, 1B, 1C. The local user interfaces 5A, 5B, 5C and the remote user interface 13 are suitable for displaying user interface windows for controlling the print job queue residing in the print controller 4A, 4B, 4C respectively. The local user interfaces 5A, 5B, 5C and the wireless remote user interfaces 13 are suitable for displaying images - front and back side images - to be printed according to the invention, e.g. a front side image with cut marks, a back side image with trim box and filled-out bleed box according to the method of the present invention. In a further embodiment the user interface window comprises a user operable item (not shown) for selecting at least one back side image to which the method according to the invention is applied. In another embodiment a computer in the network N has a wired (or even wireless) remote user interface for displaying the front and back side images according to the invention and controlling the print job queue of the printing systems 1A, 1B, 1C like the work stations 11A, 11B, 11C in FIG. 1.

The print controller 4A, 4B, 4C comprises a memory comprising received images to be printed. The print controller 4A, 4B, 4C is configured to receive the images to be printed double-sided on the recording medium and to apply electronic signals to the user interface 5A, 5B, 5C, 13 based on the received images to show the received images in an appropriate user interface window. The print controller 4A, 4B, 4C is also configured - in case of double-sided printing - to couple a front side image to a back side image which have to be printed at a same X,Y location at the front side, respectively back side of the recording medium. The coupling may take place via user input by means of the user interface 5A, 5B, 5C, 13.

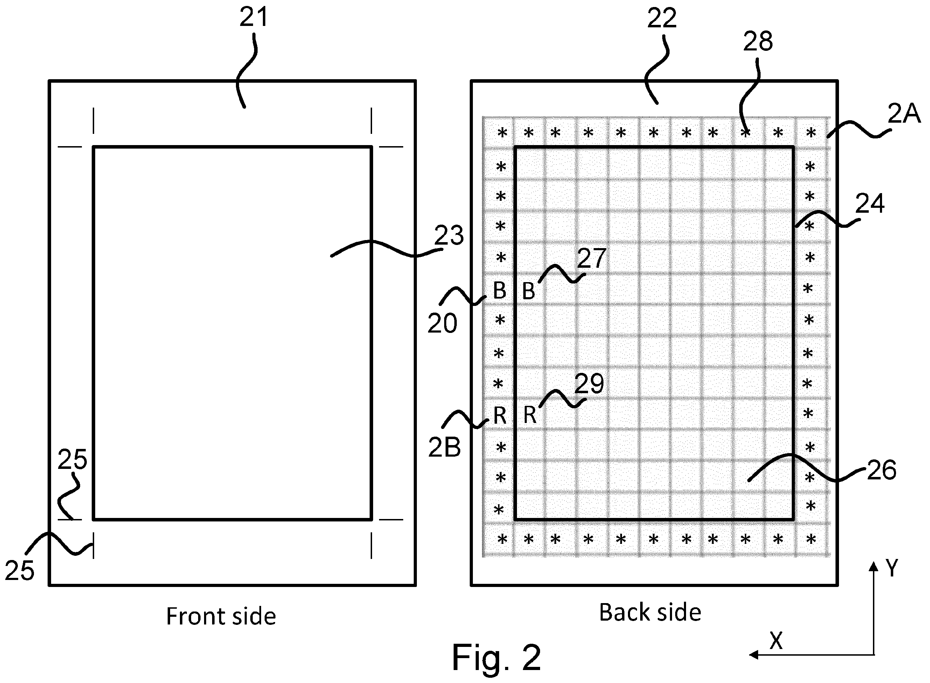

Fig. 2 shows a schematic view of a front side image 23, a back side image 24 and an extended back side image 2A according to the invention. The front side image 23 is intended to be printed on a front side 21 of the recording medium. The extended back side image 2A including the original back side image 24 and additional pixels 28 is intended to be printed on a back side 22 of the recording medium. The recording medium shown in Fig. 2 can have arbitrary dimensions in an X and Y direction.

The front side image 23 is printed with cut marks 25 for cutting the printed front side image out of the recording medium after printing the front side image 23 and the extended back side image 2A.

The front side image 23 consists of pixels (not shown) which have values with respect to an XY position and a colour. The back side image 24 consists of pixels 26 which have values with respect to an XY position and a colour.

According to the present invention the back side image 24 is automatically extended with additional coloured pixels 28 shown with an asterix (*) in Fig. 2. The additional coloured pixels 28 are surrounding the back side image 24 on all edges of the back side image 24.

For convenience reasons, the rows and columns of additional pixels 28 shown in Fig. 2 have a width of one pixel. However, rows and columns having a width of more than one pixel may be envisioned. A system setting for double-sided printing may be provided by the printing system which system setting defines a default value for the width of the rows and columns of the additional pixels 28. According to an embodiment the user interface of the printing system is providing a corresponding print setting for the same purpose in order to set another value for the width than the default value. The width may be expressed in a SI unit like mm. or in a number of pixels.

According to an embodiment a colour of an additional pixel is determined to be equal to a colour of corresponding pixel on an edge of the back side image 24. For example, an additional pixel 20 gets a blue colour (indicated with character "B" in Fig. 2) which equals the colour of the corresponding pixel 27 on an edge of the back side image 24. For example, an additional pixel 2B gets a red colour (indicated with character "R" in Fig. 2) which equals the colour of the corresponding pixel 29 on an edge of the back side image 24. By doing so, no artefacts, i.e. colour differences, are visible in a printed extended back side image 2A in an area of the pixels 27, 29 on an edge of the back side image 24 and the corresponding added coloured pixels 20, 2B on an edge of the extended back side image 2A. By having the additional pixels 20, 2B filled with the same colour as the pixels 27, 29 on the edge of the back side image 24, even if the alignment with respect to the front side image 23 is shifted by one or more pixels a white line will not appear on the edge of the print.

In particular the well-known PDF format for images gives an option to define boxes in relation to an image to be printed which boxes are used for different purposes. Such boxes are an art box, a trim box, a bleed box, a media box, etc. By using some of these boxes an elimination of the registration faults which are visible on the printed extended back side image 2A is achieved.

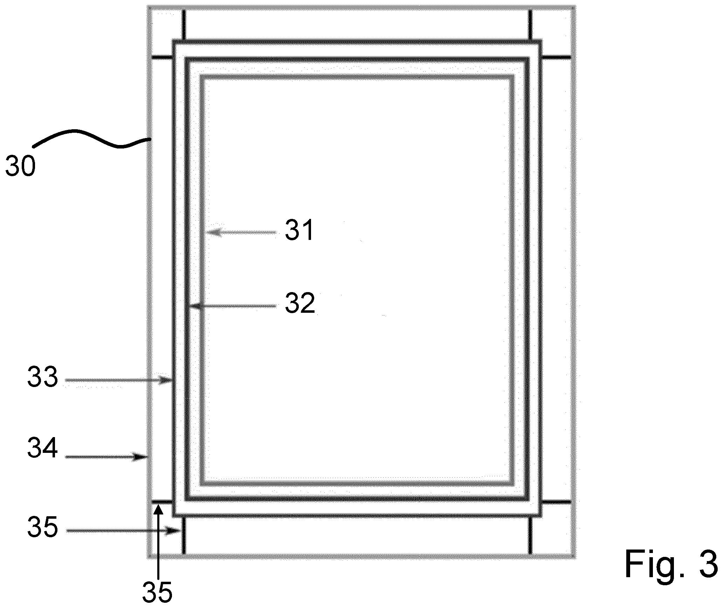

Fig. 3 shows a back side of a virtual recording medium 30 provided with a back side image 32 with a trim box 32. Within the trim box 32 there is an art box 31. Outside of the trim box 32 there is a bleed box 33 and a media box 34. The virtual recording medium 30 is also provided with cut marks 35 which are present on the front side (not shown) of the virtual recording medium 30. The cut marks 35 aligned with the edges of the trim box 32 and the edges of the image 32.

According to an embodiment of the present invention the automatic fill out of the additional pixels 28 shown in Fig. 2 comprises a fill out of an area between the bleed box 33 and the trim box 32 of the back side image 32, wherein the bleed box 33 is surrounding the trim box 32 and the trim box 32 has the same dimensions as the back side image 32.

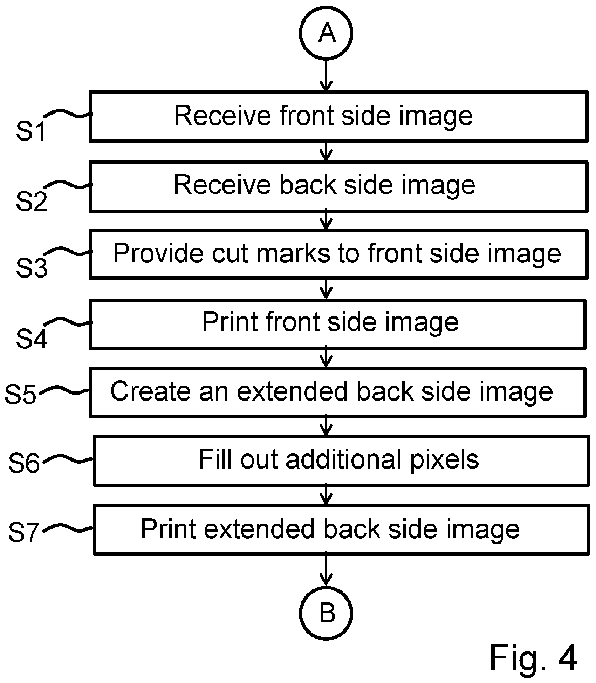

Fig. 4 shows a schematic flow diagram illustrating a method according to the invention. The method is suitable for controlling a printing system for printing images on both sides of the recording medium. The printing system comprises a print engine and a print controller for managing the printing of digital images on both sides of the recording medium. The method starts in a starting point A and leads to a first step S1.

In the first step S1 the print controller receives a front side image to be printed at a first location on a first side of the recording medium.

In a second step S2 the print controller receives a back side image to be printed at a second location on a second side of the sheet corresponding to the location on the first side of the recording medium.

In a third step S3 the front side image is provided with cut marks for a cutting process applied to the front side image, wherein the cutting process is planned after printing on both sides of the recording medium.

In a fourth step S4 the front side image and the cut marks are printed at the first location on the first side of the recording medium.

In a fifth step S5 an extended back side image is automatically created which comprises the back side image and additional pixels surrounding the back side image.

In a sixth step S6 a fill out of the additional pixels by coloured pixels is automatically established.

In a seventh step S7 the extended back side image is printed at the second side of the recording medium such that the back side image is printed at the second location on the second side of the recording medium.

The first step S1 and the second step S2 may be interchanged. The fourth step S4 may be executed just before the seventh step S7.

The method ends in an end point B.

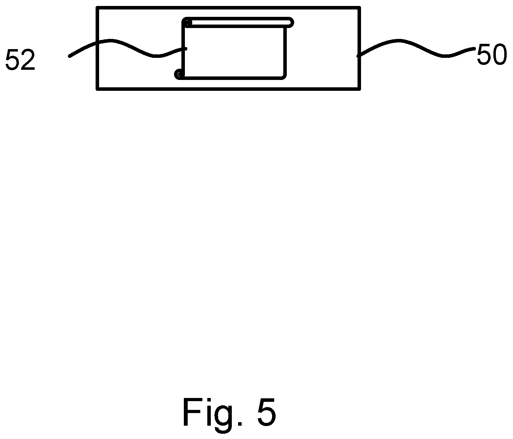

Fig. 5 schematically shows a non-transitory software medium 50 according to the invention. The software medium 50 comprises executable code 52 configured to, when executed, perform the method according to the invention, e.g. as described with respect to either the printing system 1A, 1B, 1C shown in Fig. 1 or the method of controlling the printing system 1A, 1B, 1C according to any or all of the Figs. 1 to 4 and/or according to any of the variants and modifications of the printing system 1A, 1B, 1C and/or of the method described herein.

The non-transitory software medium 50 may, specifically, be formed as a CD or a CD-ROM, a DVD or a DVD-ROM, a BluRay disc or a BluRay-ROM disc, a magnetic hard drive, a solid state disk (SSD) hard drive, a USB memory device and so on.

## Claims

1. A method for double-sided printing of a plurality of digital images on a recording medium by means of a printing system (1A, 1B, 1C), each image of the plurality of digital images consisting of a plurality of pixels, wherein the method comprises the steps of
- receiving a front side image (23) to be printed at a first location on a first side (21) of the recording medium,
- receiving a back side image (24) to be printed at a second location on a second side (22) of the recording medium corresponding to the location on the first side (21) of the recording medium,
- providing the front side image (23) with cut marks (25) for a cutting process applied to the front side image (23), wherein the cutting process is planned after printing on both sides (21,22) of the recording medium, and
- printing the front side image (23) and the cut marks (25) at the first location on the first side (21) of the recording medium,
wherein the method comprises the steps of
- automatically creating an extended back side image (2A) which comprises the back side image (24) and additional pixels (28) surrounding the back side image (24),
- automatically establishing a fill out of the additional pixels by coloured pixels and
- printing the extended back side image (2A) at the second side (22) of the recording medium such that the back side image (24) is printed at the second location on the second side (22) of the recording medium.

2. A method according to claim 1, wherein the printing system comprises a user interface (5A, 5B, 5C, 13) which is configured to display a plurality of front side images and a plurality of selectable back side images corresponding to the front side images and the method comprises the steps of selecting at least one selectable back side image and applying the steps of the method according to claim 1 to the at least one selected back side image.

3. A method according to any of the preceding claims, wherein the step of establishing the fill out of the additional pixels comprises a fill out of an area between a bleed box (33) and a trim box (32) of the back side image (32), wherein the bleed box (33) is surrounding the trim box (32) and the trim box (32) has the same dimensions as the back side image (33).

4. A method according to any of the preceding claims, wherein the step of establishing the fill out comprises the sub-step of replicating all pixels on all edges of the back side image into the additional pixels.

5. A printing system (1A, 1B, 1C) for double-sided printing of a plurality of digital images on a recording medium, the printing system configured to execute a method according to any one of the preceding claims.

6. A printing system according to claim 5, wherein the printing system is a roll-based printing system and the recording medium is a roll of medium.

7. A printing system according to claim 6, wherein the roll-based printing system is a roll to roll printing system.

8. A printing system according to claim 5, wherein the printing system is a flatbed printer.

9. A software medium (50) comprising executable program code (52) to cause a printing system (1A, 1B, 1C) according to any one of claims 5 - 8 to execute the steps of a method according to any of the claims 1 - 4.

## Patentansprüche

1. Verfahren zum beidseitigen Drucken einer Vielzahl digitaler Bilder auf ein Aufzeichnungsmedium mittels eines Drucksystems (1A, 1B, 1C), wobei jedes der Vielzahl digitaler Bilder aus einer Vielzahl von Pixeln besteht, wobei das Verfahren die folgenden Schritte umfasst:
- Empfangen eines Vorderseitenbildes (23), das an einer ersten Stelle auf einer ersten Seite (21) des Aufzeichnungsmediums gedruckt werden soll,
- Empfangen eines Rückseitenbildes (24), das an einer zweiten Stelle auf einer zweiten Seite (22) des Aufzeichnungsmediums entsprechend der Stelle auf der ersten Seite (21) des Aufzeichnungsmediums gedruckt werden soll,
- Versehen des Vorderseitenbildes (23) mit Schnittmarkierungen (25) für einen Schneidevorgang, der auf das Vorderseitenbild (23) angewendet wird, wobei der Schneidevorgang nach dem Bedrucken beider Seiten (21, 22) des Aufzeichnungsmediums geplant wird, und
- Drucken des Vorderseitenbildes (23) und der Schnittmarkierungen (25) an der ersten Stelle auf der ersten Seite (21) des Aufzeichnungsmediums,
wobei das Verfahren die folgenden Schritte umfasst:
- automatisches Erzeugen eines erweiterten Rückseitenbildes (2A), das das Rückseitenbild (24) und zusätzliche Pixel (28) umfasst, die das Rückseitenbild (24) umgeben,
- automatisches Ausfüllen der zusätzlichen Pixel durch farbige Pixel und
- Drucken des erweiterten Rückseitenbildes (2A) auf die zweite Seite (22) des Aufzeichnungsmediums, so dass das Rückseitenbild (24) an der zweiten Stelle auf der zweiten Seite (22) des Aufzeichnungsmediums gedruckt wird.

2. Verfahren nach Anspruch 1, wobei das Drucksystem eine Benutzerschnittstelle (5A, 5B, 5C, 13) umfasst, die so konfiguriert ist, dass sie mehrere Vorderseitenbilder und mehrere auswählbare Rückseitenbilder entsprechend den Vorderseitenbildern anzeigt, und das Verfahren die Schritte umfasst, mindestens ein auswählbares Rückseitenbild auszuwählen und die Schritte des Verfahrens nach Anspruch 1 auf das mindestens eine ausgewählte Rückseitenbild anzuwenden.

3. Verfahren nach einem der vorstehenden Patentansprüche, wobei der Schritt des Festlegens des Ausfüllens der zusätzlichen Pixel ein Ausfüllen eines Bereichs zwischen einem Beschnittfeld (33) und einem Beschnittrahmen (32) des Rückseitenbildes (32) umfasst, wobei das Beschnittfeld (33) ein den Beschnittrahmen (32) umgebender Bildbereich (33) ist und der Beschnittrahmen (32) die gleichen Abmessungen wie das Rückseitenbild (32) aufweist. (33) umgibt.

4. Verfahren nach einem der vorstehenden Ansprüche, wobei der Schritt des Ausfüllens den Teilschritt des Replizierens aller Pixel an allen Kanten des Rückseitenbildes in die zusätzlichen Pixel umfasst.

5. Drucksystem (1A, 1B, 1C) zum beidseitigen Drucken einer Vielzahl digitaler Bilder auf ein Aufzeichnungsmedium, wobei das Drucksystem so konfiguriert ist, dass es ein Verfahren gemäß einem der vorstehenden Ansprüche ausführt.

6. Drucksystem nach Anspruch 5, wobei das Drucksystem ein rollenbasiertes Drucksystem ist und das Aufzeichnungsmedium eine Medienrolle ist.

7. Drucksystem gemäß Anspruch 6, wobei das rollenbasierte Drucksystem ein Rollendrucksystem ist.

8. Drucksystem nach Anspruch 5, wobei das Drucksystem ein Flachbettdrucker ist.

9. Software-Medium (50) mit ausführbarem Programmcode (52), um ein Drucksystem (1A, 1B, 1C) gemäß einem der Ansprüche 5 bis 8 zu veranlassen, die Schritte eines Verfahrens gemäß einem der Ansprüche 1 bis 4 auszuführen.

## Revendications

1. Procédé d'impression recto-verso d'une pluralité d'images numériques sur un support d'enregistrement au moyen d'un système d'impression (1A, 1B, 1C), chaque image de la pluralité d'images numériques étant constituée d'une pluralité de pixels, le procédé comprenant les étapes consistant à
- recevoir une image recto (23) à imprimer à un premier emplacement sur une première face (21) du support d'enregistrement,
- recevoir une image arrière (24) à imprimer à un deuxième emplacement sur une deuxième face (22) du support d'enregistrement correspondant à l'emplacement sur la première face (21) du support d'enregistrement,
- fournir à l'image avant (23) des repères de découpe (25) pour un processus de découpe appliqué à l'image avant (23), le processus de découpe étant planifié après l'impression sur les deux côtés (21, 22) du support d'enregistrement, et
- l'impression de l'image de face (23) et des marques de découpe (25) à l'emplacement premier sur la première face (21) du support d'enregistrement,
dans lequel le procédé comprend les étapes consistant à
- créer automatiquement une image arrière étendue (2A) qui comprend l'image arrière (24) et des pixels supplémentaires (28) entourant l'image arrière (24),
- établir automatiquement un remplissage des pixels supplémentaires par des pixels colorés et
- imprimer l'image arrière étendue (2A) sur le deuxième côté (22) du support d'enregistrement de telle sorte que l'image arrière (24) soit imprimée au deuxième emplacement sur le deuxième côté (22) du support d'enregistrement.

2. Procédé selon la revendication 1, dans lequel le système d'impression comprend une interface utilisateur (5A, 5B, 5C, 13) qui est configurée pour afficher une pluralité d'images de face et une pluralité d'images de dos sélectionnables correspondant aux images de face, et le procédé comprend les étapes consistant à sélectionner au moins une image de dos sélectionnable et à appliquer les étapes du procédé selon la revendication 1 à la au moins une image de dos sélectionnée.

3. Procédé selon l'une quelconque des revendications précédentes, dans lequel l'étape consistant à établir le remplissage des pixels supplémentaires comprend un remplissage d'une zone entre une zone de fond perdu (33) et une zone de rognage (32) de l'image de face arrière (32), dans lequel la zone de fond perdu (33) est un e entourant la zone de rognage (32) et la zone de rognage (32) a les mêmes dimensions que l'image de face arrière (32). (33).

4. Procédé selon l'une quelconque des revendications précédentes, dans lequel l'étape consistant à établir le remplissage comprend la sous-étape consistant à reproduire tous les pixels sur tous les bords de l'image arrière dans les pixels supplémentaires.

5. Système d'impression (1A, 1B, 1C) pour l'impression recto-verso d'une pluralité d'images numériques sur un support d'enregistrement, le système d'impression étant configuré pour exécuter un procédé selon l'une quelconque des revendications précédentes.

6. Système d'impression selon la revendication 5, dans lequel le système d'impression est un système d'impression à rouleaux et le support d'enregistrement est un rouleau de support.

7. Système d'impression selon la revendication 6, dans lequel le système d'impression à rouleaux est un système d'impression rouleau à rouleau.

8. Système d'impression selon la revendication 5, dans lequel le système d'impression est une imprimante à plat.

9. Support logiciel (50) comprenant un code de programme exécutable (52) pour amener un système d'impression (1A, 1B, 1C) selon l'une quelconque des revendications 5 à 8 à exécuter les étapes d'un procédé selon l'une quelconque des revendications 1 à 4.
